# EUROPÄISCHE PATENTSCHRIFT

(11) **EP 0 347 644 B1**
(45) Veröffentlichungstag und Bekanntmachung des Hinweises auf die Patenterteilung: **16.02.1994**
(21) Anmeldenummer: 89110292.3
(22) Anmeldetag: 07.06.1989
(51) Int. Cl.: H04Q 11/04, H04Q 3/545

(54) **Modular strukturiertes digitales Kommunikationssystem**
Modular digital communication system
Système de communication numérique modulaire

(30) Priorität: 13.06.1988 DE 3820072
(43) Veröffentlichungstag der Anmeldung: 27.12.1989
(73) Patentinhaber: SIEMENS AKTIENGESELLSCHAFT, 80333 München (DE)
(72) Erfinder: Helsmoortel, Luc, B-08401 Bredene (BE); Lagrou, Jaak, B-08100 Torhout (BE); Glas, Jose, B-9853 Deinze (BE)

(56) Entgegenhaltungen:
- US-A- 4 680 754
- IEEE JOURNAL OF SOLID-STATE CIRCUITS, Band SC-19, Nr. 4, August 1984, Seiten 485-490, IEEE, New York, US; L. LERACH et al.: "Peripheral board controller for digital exchange systems"
- IEEE TRANSACTIONS ON COMMUNICATIONS, Band COM-27, Nr. 7, Juli 1979, Seiten 961-972, IEEE, New York, US; N.J. SKAPERDA: "Some architectural alternatives in the design of a digital switch"
- TELCOM REPORT, Band 5, Nr. 4, 1982, Seiten 262-266, Berlin, DE; K. FRIESER et al.: "Digital concentrators in the EWSD telephone switching system"
- ISS '81, INTERNATIONAL SWITCHING SYMPOSIUM, Montreal, 21.-25. September 1981, Session 14 A, Papier 4, Seiten 1-9; G. OLIVER et al.: "The subscriber terminal concentrator E10-CT and its use in the French electronic telephone directory service"
- TELCOM REPORT, Band 6, Nr. 2, April 1983, Seiten 113-119, Passau, DE; W.STROBELT: "Digitale Vierdrahtvermittlung für Sondernetze in PCM-Technik"
- ICs For Telecommunications, Edition 1988/1989, Firma Siemens in München. Bestellnummer: B-1 B3865-X-X-7600 2/88 (1988) Februar.

## Beschreibung

Aus ISDN in the Office - HICOM, Sonderausgabe Telcom Report und Siemens-Magazin COM ist ein modular strukturiertes digitales Kommunikationssystem bekannt, das ein einheitliches System für die Übermittlung von Sprache, Text und Daten darstellt. Der modulare Systemaufbau drückt sich dabei in der Gliederung in selbständige Funktionsbereiche des Kommunikationssystems aus, wobei interne Schnittstellen zwischen diesen einzelnen Funktionsbereichen vorgesehen sind. Wesentliche Funktionsbereiche sind dabei die Peripherie, das Koppelnetz und die zentrale Steuerung.

In der Peripherie dienen Anschlußbaugruppen der Schnittstellenanpassung zwischen dem Kommunikationssystem und Geräten unterschiedlicher Kommunikationsart beziehungsweise unterschiedlicher Signalisierungsverfahren. Als teilnehmerorientierte Geräteanschlüsse treten zum Beispiel ISDN-Basisanschlüsse für digitale Terminals auf, bei denen das Signalisierungsverfahren nach dem ISDN-Protokoll abgewickelt wird. Weitere digitale Teilnehmeranschlußbaugruppen (SLMB - Subscriber Line Module Burst) dienen dem 1 Kanal-Anschluß von digitalen Sprachterminals oder Vermittlungsterminals. Außerdem werden zum Anschluß von analogen Sprachendgeräten entsprechende analoge Teilnehmeranschlußbaugruppen (SLMA - Subscriber Line Module Analog) eingesetzt. In ähnlicher Weise werden auch Leitungsanschlußbaugruppen als Anschlußschnittstelle für analoge und digitale Leitungen mit den Verkehrsarten Amtsverkehr, Querverkehr sowie Haupt- und Unteranlagenverkehr unterschieden.

Die Anschlußbaugruppen weisen jeweils eine bestimmte Anzahl von Anschlußschnittstelleneinrichtungen mit Leitungsanpassungen sowie eine allen diesen Anschlußschnittstelleneinrichtungen zugeordnete Baugruppen-Prozessorsteuerung auf. Eine mögliche Realisierung einer solchen Baugruppen-Prozessorsteuerung ist dem US-Patent 4 694 452 zu entnehmen. Die Baugruppen-Prozessorsteuerung verteilt die Sprach- bzw. Datensignale von den Anschlußschnittstelleneinrichtungen auf Zeitkanäle einer PCM-strukturierten Verbindungsleitung (Highway) bzw. bewirkt die Ankopplung der Zeitkanäle einer zweiten PCM-strukturierten Verbindungsleitung an die Anschlußschnittstelleneinrichtungen. Darüberhinaus ist eine HDLC-Schnittstelleneinrichtung (High Level Data Link Control) vorgesehen, über die die Signalisierungsinformationen im HDLC-Protokoll an die Systemsteuerung übergeben werden. Ein der Baugruppen-Prozessorsteuerung zugehöriger Mikroprozessor wickelt die Protokoll- bzw. Prozeßsteuerung ab und paßt die Leitungssignalisierungen an die Schnittstellenmeldungen des Systems an. Die hierfür erforderlichen Programme werden aus einem Hintergrundspeicher des Systems in einen vom Mikroprozessor verwalteten Speicher geladen. Für digitale Anschlüsse wird das Protokoll gemäß den ISO-Schichten 1 und 2 abgewickelt, während für analoge Anschlüsse die BORSCHT-Funktionen realisiert werden.

In dem bekannten Kommunikationssystem werden mehrere Teilnehmeranschlußbaugruppen und/oder Leitungsanschlußbaugruppen funktional und konstruktiv zu einem Peripheriemodul zusammengefaßt, das eine Schnittstellenbaugruppe zum digitalen Koppelnetz und zur Systemsteuerung aufweist. Die Anpassung des modular strukturierten Kommunikationssystems an eine unterschiedliche Anzahl von angeschalteten Endgeräten bzw. Leitungen erfolgt durch Vorsehen einer entsprechenden Anzahl von Teilnehmeranschlußbaugruppen bzw. Leitungsanschlußbaugruppen je Peripheriemodul bzw. bei anwachsender Anzahl von Teilnehmern bzw. Verbindungsleitungen durch das Vorsehen von zwei oder drei Peripheriemodulen.

Gemäß dem Dokument "ICs For Telecommunications, Edition 1988/89 der Siemens AG mit der Bestellnummer B-1 B3865-X-X-7600, Seiten 54, 55 ist ein weiteres Kommunikationssystem der vorher genannten Art bekannt. Implizit ist dem Dokument die Erweiterbarkeit dieses Systems durch Vervielfachung der Systemstruktur zu entnehmen.

Gemäß dem Dokument IEEE Transactions on Communications, Band COM-27, Nr. 7, Juli 1979, Seiten 961-972, IEEE, New York, US; N.J. Skaperda: "Some Architectural Alternatives in The Design of a Digital Switch" ist eine zentrale Steuerungsstruktur eines Kommunikationssystems bekannt, die zwei Pre-Processing-Ebenen zur Entlastung des zentralen Prozessors umfaßt. Aspekte der Erweiterbarkeit eines solchen Systems sind hier nicht behandelt.

Die der Erfindung zugrundeliegende Aufgabe besteht darin, ein digitales Kommunikationssystem der eingangs beschriebenen Art derart modular zu strukturieren, daß unter weitestgehender Verwendung üblicher Telekommunikationsbausteine, wie Anschlußbaugruppen, Koppelfeldbaustein und Datenübertragungsbausteinen, eine einfache additive Erweiterbarkeit bestehender Systeme bzw. der Aufbau von Systemen mit einer verhältnismäßig geringen Anzahl von Teilnehmergeräten bzw. Leitungsanschlüssen (etwa bis 200) ermöglicht ist. Dies wird durch das im Patentanspruch 1 definierte Kommunikationssystem erreicht.

Die für das Erreichen der additiven Modularität wesentlichen Sturkturmerkmale sind dabei die Bildung solcher Peripheriemodule, die maximal 32 Teilnehmer- bzw. Verbindungsleitungen zugeordnet sind, das Vorsehen je eines (Steuerinformation-) Übermittlungsbausteins zu jedem Peripheriemodul und die Zuordnung von wenigstens - zugleich vorzugsweise - zwei Übermittlungseinrichtungen an einen Input/Output-Prozessor.

Eine vorteilhafte Weiterbildung der Erfindung dient der Versorgung des Kommunikationssystems mit Hörtönen, zum Beispiel Freizeichen und Besetztzeichen bzw. Ansagen oder Musikeinspielungen im Haltezustand einer Verbindung. Diese Weiterbildung der Erfindung dient zugleich der Entlastung der Anschlußbaugruppen von der Erzeugung bzw. Verarbeitung bestimmter Wählzeichen, wie z.B. Zeichen im Mehrfrequenzcode. Die Weiterbildung der Erfindung besteht darin, daß ein weiteres mittels zweier PCM-strukturierter Verbindungen an den digitalen Koppelfeldbaustein angeschlossenes Peripheriemodul mit einer zentralen Signalisiereinrichtung mit Sende- und Empfangseinrichtungen für Hörtöne und Wählzeichen vorgesehen ist. In diesem Zusammenhang wird darüberhinaus vorgesehen, daß zumindest die Sende- und Empfangseinrichtungen für Wählzeichen eine Datenschnittstelle für die blockweise, gesicherte Übergabe von in Wählzeichen umzuwandelnde bzw. aus den Wählzeichen abgeleiteten binär codierten Ziffern zwischen dem weiteren Peripheriemodul und einem weiteren diesem zugeordneten Übermittlungsbaustein aufweist. Die Übermittlung solcher Wählzeichen erfolgt also ebenfalls an einen Übermittlungsbaustein, jedoch auf insgesamt anderem Wege als bei den Wählinformationen, die direkt von einem der Peripheriemodule an den zugehörigen Übermittlungsbaustein übertragen werden. So werden beispielsweise empfangene Frequenzgemische, die im Mehrfrequenzcode-Wählverfahren übertragen werden, über den digitalen Koppelfeldbaustein an das mit entsprechenden Empfangseinrichtungen ausgestattete weitere Peripheriemodul übertragen und dort in eine Signalisierungsinformation umgesetzt, die das gleiche Datenformat wie die Signalisierungsinformationen der anderen Peripheriemodule aufweist. Die Durchschaltung der Frequenzgemische von einem empfangenden Peripheriemodul über den digitalen Koppelfeldbaustein erfolgt dabei mittels entsprechender Steuerinformationen, die über die Datenschnittstelleneinrichtung des empfangenden Peripheriemoduls an den zugehörigen Übermittlungsbaustein übergeben werden.

Um eine maximale Ausnutzung des weiteren Peripheriemoduls zu erreichen, kann das weitere Peripheriemodul zusätzlich Teilnehmeranschlußbaugruppen und/oder Leitungsanschlußbaugruppen aufweisen, deren Anzahl derart bemessen ist, daß maximal 32 Zeitkanäle der PCM-strukturierten Verbindungen gleichzeitig belegbar sind.

Eine weitere vorteilhafte Ausgestaltung der Erfindung betrifft die Einbettung eines Konferenznetzwerks in das modular strukturierte Kommunikationssystem und sieht vor, daß ein Sprachsignale von Konferenzgesprächen bewertender Konferenzbaustein mittels zweier PCM-strukturierter Verbindungen an den digitalen Koppelfeldbaustein und eine Einstellsteuerung des Konferenzbausteins an den zentralen Steuerprozessor angeschlossen ist. Die anderen Bestandteile des digitalen Kommunikationssystems bleiben davon völlig unberührt, so daß auch eine nachträgliche Einfügung eines Konferenznetzwerks in das Kommunikationssystem ohne Schwierigkeiten möglich ist. Die modulare Strukturierung des erfindungsgemäßen Kommunikationssystems erfolgt insgesamt nach funktionalen Gesichtspunkten, berücksichtigt aber auch weitgehend Anordnungsaspekte. So wird z. B. vorzugsweise jedes periphere Modul als eine bauliche Einheit ausgebildet, wobei das in gewissem Umfang auch zentrale Resourcen bildende periphere Modul baulich mit dem zentralen Steuerprozessor zu einer Zentralbaugruppe zusammengefaßt sein kann. In ähnlicher Weise können z. B. auch der digitale Koppelfeldbaustein und das Konferenznetzwerk zu einer baulichen Einheit zusammengefaßt sein. Diese Einheit kann auch den einen für den Grundausbau des Kommunikationssystems vorgesehenen Input/Output-Prozessor umfassen. Eine weitere Baueinheit kann Einbauplätze für die Übermittlungsbausteine und die für größere Systeme notwendigen weiteren Input/Output-Prozessoren aufweisen.

Die Erfindung wird im folgenden anhand eines in drei Figuren dargestellten Ausführungsbeispiels erläutert.

Dabei zeigt
- Fig. 1: die Architektur eines Kommunikationssystems mit zwei peripheren Modulen für insgesamt 64 Teilnehmer- bzw. Leitungsanschlüsse,
- Fig. 2: eine Prinzipdarstellung des zentralen Steuerprozessors und eines Input/Output-Prozessors, und
- Fig. 3: eine Prinzipdarstellung eines peripheren Moduls mit Einrichtungen zur Versorgung des Kommunikationssystems mit Hörtönen und zum Empfangen und Senden von Wahlzeichen.

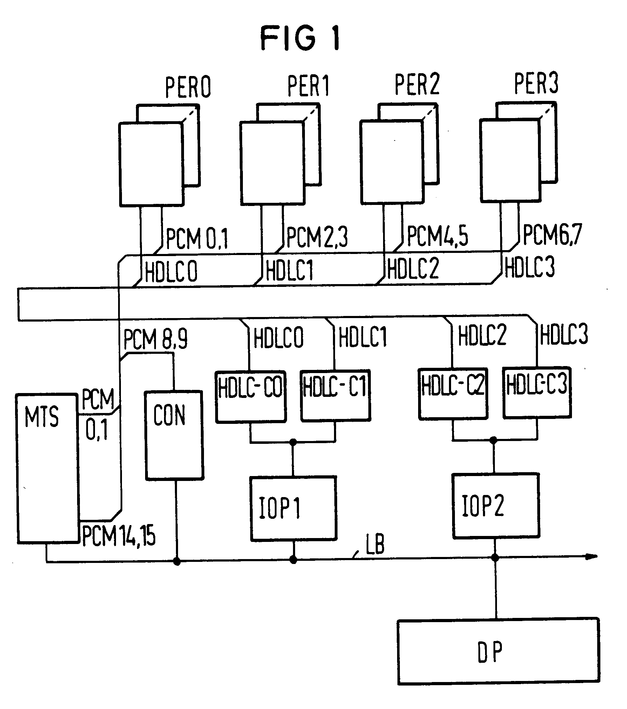

Das in Fig. 1 dargestellte Kommunikationssystem ist im wesentlichen in drei hierarchische Strukturebenen unterteilt. Die im wesentlichen dem Anschluß von Endgeräten und Leitungen dienende Peripherieebene wird durch drei Peripheriemodule PER1, PER2, PER3 gebildet, die jeweils aus mehreren Teilnehmeranschlußbaugruppen bzw. Leitungsanschlußbaugruppen derart gebildet sind, daß maximal 64 Ports - z. B. 32 Zweidraht-Leitungsanschlüsse - an den Peripheriemodulen PER1...PER3 zugänglich sind.

Die Teilnehmeranschlußbaugruppen können beispielsweise dem Anschluß analoger Teilnehmerendgeräte dienen. Sie weisen dann üblicherweise je Endgerät eine Schnittstelleneinrichtung mit Ruf- und Schleifenschlußindikation auf, der jeweils eine Prozessoreinrichtung zur Analog-Digital- bzw. Digital-Analogwandlung und zur programmierbaren Eingangsimpedanz bzw. Pegelanpassung zugeordnet ist. Eine mögliche Realisierung dieser Bestandteile einer Teilnehmeranschlußbaugruppe ist der US-PS 4 381 561 zu entnehmen. Die Schnittstelle zwischen maximal 16 solcher leitungsindividuellen Einrichtungen und kommunikationssysteminternen PCM-Verbindungen bzw. HDLC-Steuerleitungen (High Level Data Link Control) wird durch eine Baugruppen-Prozessorsteuerung gebildet, die in Aufbau und Wirkungsweise beispielsweise dem in der US-PS 4 694 452 beschriebenen Prozessor entsprechen kann. Weitere Details der Funktion dieses Prozessors sind der Produktschrift der Firma Siemens AG, PBC Peripheral Board Controller PEB 2050 (SM 205) Preliminary Technical Description (Part 1) Ordering No. B/2684-101, zu entnehmen. Die Koordinierungssteuerung der Baugruppen-Prozessorsteuerung erfolgt durch einen Mikroprozessor, der integraler Bestandteil jeder Teilnehmeranschlußbaugruppe sein kann. Die Aufgabe der Koordinierungssteuerung kann aber auch von einem der jeweiligen Teilnehmeranschlußbaugruppe zugeordneten Input/Output-Prozessor, z. B. IOP1, übernommen werden.

In jedem der Peripheriemodule PER1, PER2, PER3 können allein, zusätzlich oder in Kombination andere Anschlußbaugruppen für beispielsweise digitale oder ISDN-Geräte bzw. Verbindungsleitungen vorgesehen sein.

Die im wesentlichen durch Baugruppen-Prozessorsteuerungen und wenigstens einen der Koordinierung derselben dienenden Mikroprozessor gebildeten Modul-Prozessorsteuerungen verwalten jeweils zwei PCM-strukturierte Verbindungen (PCM-Highways) PCM2, PCM3; PCM4, PCM5; PCM6, PCM7 und jeweils eine doppelgerichtete Verbindung zur Übergabe und Aufnahme von Steuerinformationen, die im standardisierten Datenübertragungsverfahren HDLC übertragen werden. Ein weiteres Peripheriemodul PER0 dient der Versorgung des Kommunikationssystems mit Hörtönen, Ansagen und Musikeinspielungen während des Haltezustandes von Verbindungen. Das zusätzliche Peripheriemodul PER0 enthält außerdem Hörzeichenempfänger, Sende- und Empfangseinrichtungen für im Mehrfrequenzcode-Verfahren übertragene Wählzeichen sowie Testsender und Testempfänger. Das zusätzliche Peripheriemodul PER0 ist in ähnlicher Weise wie die Peripheriemodule PER1, PER2, PER3 über zwei PCM-Highways PCM0, PCM1 sowie über eine Informationsübertragungsstrecke HDLC0 angeschaltet.

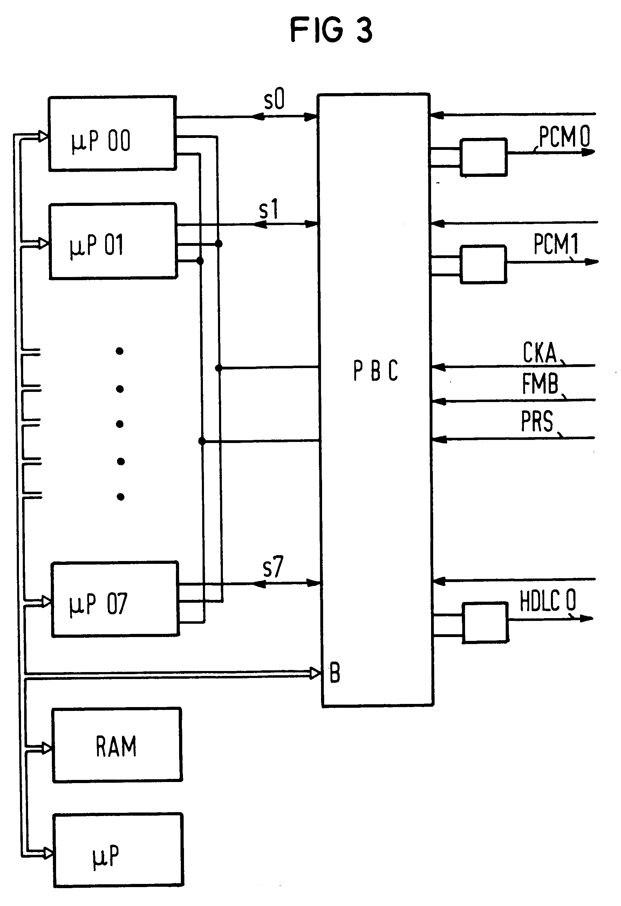

Der Aufbau des zusätzlichen Peripheriemoduls PER0 ist in Fig. 3 dargestellt und wird später beschrieben.

Die nächste Strukturebene des digitalen Kommunikationssystems wird durch insgesamt vier (Steuerinformation-) Übermittlungsbausteine HDLC-C0, HDLC-C1, HDLC-C2, HDLC-C3 (HDLC-Controller) sowie durch zwei Input/Output-Prozessoren IOP1, IOP2 gebildet, von denen der Input/Output-Prozessor IOP1 den beiden Übermittlungsbausteinen HDLC-C0 und HDLC-C1, der Input/Output-Prozessor IOP2 dagegen den Übermittlungsbausteinen HDLC-C2, HDLC-C3 zugeordnet ist.

Da die HDLC-Norm für den Austausch von Daten, Befehlen und Meldungen in vielen einschlägigen praktisch realisierten Systemen benutzt wird, sind entsprechende Steuerinformation-Übermittlungsbausteine in Form integrierter Schaltkreise realisiert; das in der Fig. 1 dargestellte Kommunikationssystem nutzt diese Bausteine (HDLC-Controller) in der üblichen Weise, so daß keine Hardware- oder Softwareanpassungen für den Einsatz dieser Bausteine im Kommunikationssystem notwendig sind. Im Rahmen des erfindungsgemäßen Kommunikationssystems ist in den in der HDLC-Norm festgelegten Datenübertragungsblöcken das Blockprüfungsfeld von besonderer Bedeutung, da mit der in diesem Feld übertragenen Blockprüfzeichenfolge eine gegen Fehler gesicherte Übergabe von Steuerinformationen möglich ist.

In die gleiche Strukturebene wie die (Steuerinformation-) Übermittlungsbausteine HDLC-C0...HDLC-C3 gehört auch ein digitaler Koppelfeldbaustein MTS, an den sämtliche PCM-Highways PCM0, PCM1 ...PCM14, PCM15 angeschlossen sind. Der digitale Koppelfeldbaustein ist beispielsweise durch den integrierten Schaltkreis PEB 2040, Siemens AG realisiert. Aufbau und Wirkungsweise eines digitalen Koppelfeldbausteins sind beispielsweise in der US-PS 3 678 206 beschrieben.

Ebenfalls in die Strukturebene der Übermittlungsbausteine HDLC-C0 ...HDLC-C3 und des digitalen Koppelfeldbausteines MTS eingefügt ist ein Konferenz-Netzwerk CON, das mit zwei weiteren PCM-Highways PCM8, PCM9 an den digitalen Koppelfeldbaustein MTS angeschlossen ist. Eine mögliche Realisierung für das Konferenz-Netzwerk CON ist in der US-Patentschrift 4 054 757 beschrieben.

Der digitale Koppelfeldbaustein MTS und das Konferenz-Netzwerk CON sind ebenso wie die beiden Input/Output-Prozessoren IOP1, IOP2 an einen lokalen Multiplexbus LB angeschlossen, der die Schnittstelle zur hierarchisch obersten Strukturebene des digitalen Kommunikationssystems darstellt. Diese Strukturebene wird durch einen zentralen Steuerprozessor DP gebildet, der das Zusammenwirken aller Bausteine und Module des Kommunikationssystems koordiniert. Wesentliche Funktionen des zentralen Steuerprozessors sind also die Speicherung und anforderungsgerechte Abarbeitung von vermittlungstechnischen Programmen und peripheriezugewandt die Steuerung und Überwachung des lokalen Busses LB. Zusätzliche übliche Funktionen des zentralen Steuerprozessors sind betriebstechnische Abwicklungen, sicherheitstechnische Anzeigen sowie Takterzeugungen.

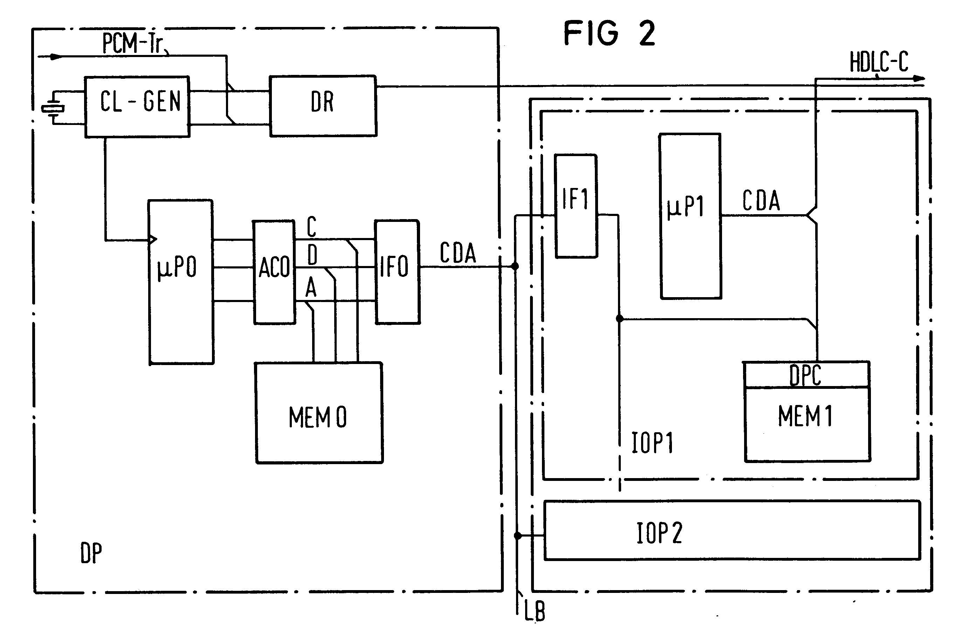

Aus der Prinzipdarstellung der Fig. 2 ist zu ersehen, daß der zentrale Steuerprozessor DP - siehe Fig. 1 - einen Mikroprozessor µP0 aufweist, dem eine Zugangssteuerung ACO vorgeschaltet ist. An dieser Zugangssteuerung ACO stehen ankommend und abgehend Steuerinformationen C, Dateninformationen D und Adreßinformationen A an. Dem Mikroprozessor µP0 ist ein interner Speicher MEM0 zugeordnet, der beispielsweise eine Speicherkapazität von etwa 1500 KByte aufweist.

Für die Synchronisierung der gesamten Vermittlungssteuerung mit den Übertragungstakten auf PCM-Leitungen ist ein Taktgenerator CL-GEN vorgesehen, der über eine angepaßte Treiberschaltung DR Taktimpulse an die Peripherieebene des Kommunikationssystems abgibt.

Der zentrale Steuerprozessor DP ist mittels einer Schnittstellensteuerung IF0 an den Multiplexbus LB - siehe Fig. 1 - angeschlossen, der unter anderem die Verbindung zu den Input-Output-Prozessoren IOP1, IOP2 darstellt.

In ähnlicher Weise wie der zentrale Steuerprozessor DP ist auch der Mikroprozessor IOP1 - und in gleicher Weise der Input/Output-Prozessor IOP2 - mit einem Mikroprozessor µP1 ausgestattet, dem ein interner Speicher MEM1 zugeordnet ist; dieser Speicher MEM1 ist als sogenanntes Dual-Port-RAM ausgebildet und weist demzufolge eine gleichzeitiges Einspeichern und Ausspeichern ermöglichende Schnittstelle DPC auf.

In Richtung auf die Peripherie werden Steuerinformationen C, Dateninformationen D und Adreßinformationen A mit zwei zugeordneten - nicht dargestellten - Übermittlungsbausteinen HDLC-C ausgetauscht. In Richtung auf den zentralen Steuerprozessor sorgt eine Schnittstellenschaltung IF1 für die Anpassung an den Multiplex-Bus LB.

Die Input-Output-Prozessoren IOP1, IOP2 unterstützen den zentralen Steuerprozessor DP bei der Abarbeitung zeitkritischer Aufgaben. Wichtige Aufgaben der Input/Output-Prozessoren IOP1, IOP2 sind das Abtasten (Polling) der Anschlußbaugruppen, die Steuerung der über die Anschlußbaugruppen an Leitungen bzw. Teilnenmer abgehenden Informationen, die Ziffernaussendung und die Ton- und Ruftaktung.

In der Fig. 3 sind die wesentlichen Bestandteile des in der Fig. 1 enthaltenen weiteren Peripheriemoduls PER0 dargestellt. In Anlehnung an die Darstellung der Fig. 1 sind die beiden PCM-Highways, die zum digitalen Koppelfeld führen, mit PCM0 und PCM1 bezeichnet. Ebenfalls in Anlehnung an die Darstellung der Fig. 1 ist der Übertragungskanal zu einem (Steuerinformation-) Übermittlungsbaustein mit HDLC0 bezeichnet.

Sowohl die PCM-Highways PCM0, PCM1 als auch der Übertragungskanal HDLC0 stellen Anschlüsse eines Prozessors PBC (Peripheral Board Controller) dar. Der Prozessor PBC ist vorzugsweise durch den gleichen Baustein wie die Baugruppen-Prozessoren realisiert. Eine weitere Anschlußebene des Prozessors PBC steht in Verbindung mit insgesamt acht Signalprozessoren µP00, µP01...µP07, denen unterschiedliche Aufgaben zugeordnet sind. Die Signalprozessoren µP00, µP01...µP07 dienen beispielsweise der Realisierung von Codeempfängern und Codesendern für im Mehrfrequenzcode-Verfahren eingesetzte Wählzeichen, für die Erzeugung von Hörtönen und Ansagen sowie für das Senden und Empfangen von Testsignalen.

Den Signalprozessoren µP00, µP01...µP07 sowie dem Prozessor PBC ist ein Speicher RAM für Programme und Daten zugeordnet; der Prozessor PBC greift über seinen Anschluß B auf eine Busstruktur zu, an die neben den Signalprozessoren µP00, µP01...µP07 auch der Speicher RAM und ein Modulprozessor µP angeschlossen sind.

Weitere dem Kommunikationssystem zugewandte Ausgänge des Prozessors PBC dienen der Aufnahme des PCM-Taktes (2,048 Mhz) CKA und eines Rahmensynchronisiertaktes von 8 kHz - FMB. Über den Anschluß PRS wird ein peripheres Rücksetzsignal zugeführt, mit dem ein definierter Ausgangszustand des weiteren Peripheriemoduls PER0 eingestellt werden kann.

## Patentansprüche

1. Kommunikationssystem
a. mit Teilnehmeranschlußbaugruppen und Leitungsanschlußbaugruppen, die
a.1 jeweils eine Anzahl von Anschlußschnittstelleneinrichtungen
a.2 und eine diesen Anschlußschnittstelleneinrichtungen zugeordnete Baugruppen-Prozessorsteuerung aufweisen,
a.2.1 die mittels zweier PCM-strukturierter Verbindungen (PCM-Highway) (PCM2, PCM3; PCM4, PCM5; PCM6, PCM7) an einen digitalen Koppelfeldbaustein (MTS) angeschlossen ist
a.2.2 und die eine Datenschnittstelleneinrichtung für eine blockweise gesicherte Übergabe von Steuerinformationen zwischen den Anschlußbaugruppen und einem diesen Zugeordneten zentralen Steuerprozessor (DP) aufweist,
**gekennzeichnet durch** die Kombination folgender Merkmale:
a.3 jeweils soviel Anschlußbaugruppen sind zu einem Peripheriemodul (PER1, PER2, PER3) zusammengefaßt, daß maximal 32 Teilnehmer- bzw. Anschlußleitungen dem jeweiligen Peripheriemodul (PER1, ER2, PER3) zugeordnet sind
b. jedem Peripheriemodul (PER1, PER2, PER3) ist ein (Steuerinformation-)Übermittlungsbaustein (HDLC-C1, HDLC-C2, HDLC-C3) mittels eines aus einem Sendekanal und einem Empfangskanal gebildeten Übertragungskanals zugeordnet
c. wenigstens zwei Übermittlungseinrichtungen (z.B. HDLC2, HDLC3) sind an einen gemeinsamen Input/ Output-Prozessor (IOP2) angeschlossen
c.1 der der zyklischen Abtastung (scanning) der Betriebszustände der Anschlußschnittstelleneinrichtungen der zugehörigen Peripheriemodule (PER1, PER2, PER3) sowie c.2 der transparenten und nichttransparenten Datenübertragung an die Übermittlungseinrichtungen (HDLC-C1, HDLC-C2, HDLC-C3) dient
d. der Input/Output-Prozessor (IOP2) ist an einen Adressen-, Steuer- und Datenleitungen führenden Multiplex-Bus (LB) angeschlossen d.1 an den Multiplex-Bus (LB) ist eine Einstellsteuerung des Koppelfeldbausteins (MTS) angeschlossen
e. der Multiplex-Bus (LB) wird von dem zentralen Steuerprozessor (DP) verwaltet, der unter Einbeziehung eines Systemdatenspeichers alle vermittlungstechnischen Vorgänge und Signalisierungen steuert.

2. Kommunikationssystem nach Anspruch 1,
**dadurch gekennzeichnet,**
daß ein weiteres mittels zweier PCM-strukturierter Verbindungen (PCM0, PCM1) an den digitalen Koppelfeldbaustein (MTS) angeschlossenes Peripheriemodul (PER0) mit einer zentralen Signalisiereinrichtung mit Sende- und Empfangseinrichtungen für Hörtöne und Wählzeichen vorgesehen ist.

3. Kommunikationssystem nach Anspruch 2,
**dadurch gekennzeichnet,**
daß zumindest die Sende- und Empfangseinrichtungen für Wählzeichen eine Datenschnittstelle für die blockweise, gesicherte Übergabe von in Wählzeichen umzuwandelnde bzw. aus den Wählzeichen abgeleiteten binär codierten Ziffern zwischen dem weiteren Peripheriemodul und einem weiteren diesem zugeordneten Übermittlungsbaustein aufweist.

4. Kommunikationssystem nach Anspruch 2 oder 3,
**dadurch gekennzeichnet,**
daß das weitere Peripheriemodul zusätzlich Teilnehmeranschlußbaugruppen und/oder Leitungsanschlußbaugruppen aufweist, deren Anzahl derart bemessen ist, daß maximal 32 Zeitkanäle der PCM-strukturierten Verbindungen gleichzeitig belegbar sind.

5. Kommunikationssystem nach einem der Ansprüche 1 bis 4,
**dadurch gekennzeichnet,**
daß ein Sprachsignale von Konferenzgesprächen bewertender Konferenzbaustein (CON) mittels zweier PCM-strukturierter Verbindungen (PCM8, PCM9) und eine Einstellsteuerung des Konferenzbausteins (CON) an den digitalen Koppelfeldbaustein (MTS) angeschlossen ist.

## Claims

1. Communication system
a. having subscriber access modules and line access modules which have
a.1 in each case a number of access interface units
a.2 and a module processor controller assigned to said access interface units
a.2.1 which is connected to a digital switching network module (MTS) by means of two PCM-structured connections (PCM highway) (PCM2, PCM3; PCM4, PCM5; PCM6, PCM7)
a.2.2 and which has a data interface unit for block-by-block protected transfer of control information between the access modules and a central control processor (DP) assigned thereto,
characterized by the combination of the following features:
a.3 in each case as many access modules are combined to form one peripheral module (PER1, PER2, PER3) that a maximum of 32 subscriber or access lines are assigned to the respective peripheral module (PER1, PER2, PER3)
b. a (control information) communication module (HDLC-C1, HDLC-C2, HDLC-C3) is assigned to each peripheral module (PER1, PER2, PER3) by means of a transmission channel formed by a transmitting channel and a receiving channel
c. at least two communication units (e.g. HDLC2, HDLC3) are connected to a common input/output processor (IOP2)
c.1 which serves for the cyclical scanning of the operating states of the access interface units of the associated peripheral modules (PER1, PER2, PER3) and also
c.2 serves for the transparent and non-transparent data transmission to the communication units (HDLC-C1, HDLC-C2, HDLC-C3)
d. the input/output processor (IOP2) is connected to a multiplex bus (LB) carrying address, control and data lines
d.1 a setting controller of the switching network module (MTS) is connected to the multiplex bus (LB)
e. the multiplex bus (LB) is managed by the central control processor (DP) which controls all switching operations and signalling with the assistance of a system data memory.

2. Communication system according to Claim 1, characterized in that a further peripheral module (PER0) which is connected by means of two PCM-structured connections (PCM0, PCM1) to the digital switching network module (MTS) and has a central signalling unit with transmitting and receiving units for call progress tones and dial pulses is provided.

3. Communication system according to Claim 2, characterized in that at least the transmitting and receiving units for dial pulses have a data interface for the block-by-block protected transfer of binary coded digits to be converted into dial pulses or to be extracted from the dial pulses respectively between the further peripheral module and a further communication module assigned thereto.

4. Communication system according to Claim 2 or 3, characterized in that the further peripheral module has additional subscriber access modules and/or line access modules, the number of which is selected in such a way that a maximum of 32 time slots of the PCM-structured connections can be simultaneously occupied.

5. Communication system according to one of Claims 1 to 4, characterized in that a conference module (CON) that evaluates speech signals from conference calls is connected by means of two PCM-structured connections (PCM8, PCM9) and a setting controller of the conference module (CON) to the digital switching network module (MTS).

## Revendications

1. Système de communication comportant
a. des modules de raccordement d'abonnés et des modules de raccordement de lignes, qui comprennent
a.1 respectivement un nombre de dispositifs d'interface de raccordement et
a.2 une unité de commande à processeur de modules, associée à ces dispositifs d'interface de raccordement et qui
a.2.1 est raccordée à un module de champ de couplage numérique (MTS) au moyen de deux liaisons à structure MIC (PCM-Highway) (PCM2, PCM3; PCM4, PCM5; PCM6, PCM7) et
a.2.2 comporte un dispositif d'interface de données pour un transfert, protégé par blocs, d'informations de commande entre les modules de raccordement et un processeur central de commande (DP) associé à ces modules,
caractérisé par la combinaison des moyens suivants :
a.3 respectivement autant de modules de raccordement sont réunis pour former un module périphérique (PER1, PER2, PER3), que le nombre maximum de 32 lignes d'abonnés ou lignes de raccordement qui sont associées au module périphérique respectif (PER1, PER2, PER3),
b. à chaque module périphérique (PER1, PER2, PER3) est associé un module de transmission (d'informations de commande) (HDLC-C1, HDLC-C2, HDLC-C3) au moyen d'un canal de transmission formé par un canal d'émission et un canal de réception,
c. au moins deux dispositifs de transmission (par exemple HDLC2, HDLC3) sont raccordés à un processeur d'entrée/sortie commun (IOP2),
c.1 qui est utilisé pour réaliser l'exploration cyclique (scanning) des états de service des dispositifs d'interface de raccordement des modules périphériques associés (PER1, PER2, PER3) et
c.2 de la transmission transparente et non transparente des données aux dispositifs de transmission (HDLC-C1, HDLC-C2, HDLC-C3),
d. le processeur d'entrée/sortie (IOP2) est raccordé à un bus de multiplexage (LB) qui véhicule des lignes de transmission d'adresses de commande et de transmission de données, et
d.1 au bus de multiplexage (LB) est raccordée une ligne de commande de réglage du module de champ de couplage (MTS),
e. le bus de multiplexage (LB) est géré par le processeur central de commande (DP), qui, moyennant l'insertion d'une mémoire de données du système, commande tous les processus techniques de commutation et toutes les signalisations.

2. Système de communication suivant la revendication 1, caractérisé par le fait qu'il est prévu un autre module périphérique (PER0), qui est raccordé au module numérique du champ de couplage (MTS) au moyen de deux liaisons à structure MIC (PCM0, PCM1), et qui comporte un dispositif central de signalisation comportant des dispositifs d'émission et de réception pour des tonalités audibles et des signaux de sélection.

3. Système de communication suivant la revendication 2, caractérisé par le fait qu'au moins les dispositifs d'émission et de réception pour des signaux de sélection comportent une interface de transmission de données pour la transmission bloc par bloc, protégée, de nombres codés en binaire, qui doivent être convertis en signaux de sélection ou devant être dérivés des signaux de sélection, entre l'autre module périphérique et un autre module de transmission associé à ce module.

4. Système de communication suivant la revendication 2 ou 3, caractérisé par le fait que l'autre module périphérique possède en outre des modules de raccordement d'abonnés et/ou des modules de raccordement de lignes, dont le nombre est choisi de telle sorte qu'au maximum 32 canaux temporels des liaisons à structure MIC peuvent être occupés simultanément.

5. Système de communication suivant l'une des revendications 1 à 4, caractérisé par le fait qu'un module de conférence (CON), qui évalue des signaux vocaux de conversation de conférence, est raccordé au module de champ de couplage numérique (MTS), au moyen de deux liaisons (PCM8, PCM9) à structure MIC et d'une unité de commande de réglage du module de conférence (CON).
